(19) **Europäisches Patentamt European Patent Office Office européen des brevets**

(11) **EP 2 784 350 B1**

(12) **EUROPEAN PATENT SPECIFICATION**

(45) Date of publication and mention
of the grant of the patent:
**11.07.2018   Bulletin 2018/28**

(51) Int Cl.:
**F16H 25/22** *(2006.01)*

(21) Application number: **13305361.1**

(22) Date of filing: **25.03.2013**

(54) **Roller screw**

Walzenschraube

Vis à rouleaux

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.10.2014   Bulletin 2014/40**

(73) Proprietor: **Aktiebolaget SKF**
**415 50 Göteborg (SE)**

(72) Inventors:
• **Abevi, Folly**
**73000 Chambery (FR)**

• **Allegri, Eric**
**73800 Montmelian (FR)**

(74) Representative: **Kloker, Markus et al**
**SKF GmbH**
**Gunnar-Wester-Straße 12**
**97421 Schweinfurt (DE)**

(56) References cited:

| EP-A2- 0 049 788 | DE-A1- 10 249 762 |
|---|---|
| DE-A1- 19 919 566 | DE-U1- 9 214 062 |
| FR-E- 83 127 | JP-A- 2009 103 291 |
| JP-A- 2009 121 562 | US-A- 3 726 151 |
| US-A- 4 037 893 | US-A1- 2014 345 138 |

**Description**

The present invention relates to the field of roller screw mechanisms for transforming a rotary movement into a linear translation movement, and vice versa.

Such a mechanism is provided with a screw having an external thread, with a nut arranged around the screw and having an internal thread, and with a plurality of longitudinal rollers engaging the external and internal threads of the screw and of the nut. Compared to a ball screw mechanism, the main advantage of a roller screw mechanism is increased admissible load capacities.

A first type of roller screw mechanism includes rollers having an external thread engaging the external and internal threads of the screw and of the nut. The threads of the rollers and the thread of the nut have helix angles that are identical to each other and different to that of the thread of the screw such that, when the screw rotates in relation to the nut, the rollers rotate on themselves and roll about the screw without moving axially inside the nut. The rollers are rotationally guided parallel with the axis of the screw by teeth added on the nut and engaging teeth of said rollers. Such a mechanism is called a planetary roller screw.

A second type of roller screw mechanism has a similar operating principle but is different as a result of an inverted arrangement. The helix angles of the threads of the rollers, of the screw and of the nut are selected such that, when the screw rotates in relation to the nut, the rollers rotate on themselves about the screw and move axially in the nut. The rollers are rotationally guided parallel with the axis of the screw by teeth provided thereon and engaging teeth of said rollers. Such a mechanism is called an inverted planetary roller screw.

With the current design of roller screw mechanisms, the teeth of the rollers and of the nut have, in cross section, an involute profile.

Furthermore, the teeth are threaded during the threading step of the rollers. During the meshing of the teeth of the rollers with the teeth of the nut, the pressure is increased at the top of the teeth due to thread on the teeth of the rollers. This increases the wear of the nut, which has to be replaced.

One solution to solve this problem is to increase the hardness of the nut. However, boring holes in the nut will become very difficult.

The aim of the present invention is to overcome these disadvantages. JP2009-103291 discloses the preamble of claim 1. More particularly, the aim of the present invention is to provide a roller screw mechanism wherein, for a given diameter, the load capacity is increased.

In one embodiment, a roller screw mechanism provided with a screw comprises an external thread, a nut surrounding and coaxial with said screw, said nut comprising an internal thread, two gear wheels mounted in a non-threaded part of the nut, each gear wheel comprising a first set of teeth having a plurality of internal, and a plurality of rollers radially located between the screw and the nut. Each roller comprises an external thread designed to engage the external and internal threads of said screw and said nut, and axially at each end a first set of teeth having a plurality of gear teeth designed to engage with the internal gear teeth of the gear wheels.

The outer diameter of the gear teeth of each roller is less or equal to the diameter of the thread root of the external thread of said roller.

Thanks to the diameter difference, the teeth of the rollers are not threaded during the threading step of the rollers. During the meshing of the teeth of the rollers with the teeth of the wheel, the contact pressure exerted by the flanks of the teeth of each roller on the flanks of the corresponding wheel is distributed over a larger surface. The wear of the wheels is thus significantly reduced.

In an embodiment, each roller comprises a second set of teeth having a plurality of gear teeth superposed on the first set of teeth so that the teeth of the second set of teeth are located between the teeth of the first set of teeth and each gear wheels comprises a second set of teeth having a plurality of gear teeth superposed on the first set of teeth so that the teeth of the second set of teeth are located between the teeth of the first set of teeth.

Each tooth of each roller has, in cross section, a concave profile curve and each tooth of each gear wheel has, in cross section, a convex profile curve. An "hypocycloid" is the curve traced by a point on the circumference of a smaller circler rotating inside the circumference of a larger fixed circle.

The portion of each concave tooth of each roller in contact with a convex tooth of the associated gear wheel can have, in cross section, a hypocycloid profile.

Providing convex-concave tooth profile enables the contact surfaces of the rollers on the gear wheels to be increased, compared with a conventional rollers with teeth having, in cross section, an involve profile.

The addendum of each tooth of each roller may be reduced to zero.

In an embodiment, each roller comprises, at each end, a cylindrical stud axially extending from the teeth of the roller and designed to be fitted inside cylindrical through-out recesses provided on an annular spacer ring mounted radially between the thread of the screw and the associated wheel.

The hardness of the wheels can be substantially similar to the hardness of the rollers. The wheels can be made, for example, in aluminium, in order to reduce more the wear of the gear wheels.

The invention also relates to an actuator including a rotating means and a roller screw mechanism as defined above, the screw of the mechanism being coupled with the rotating means.

The present invention will be better understood upon studying the detailed description of embodiments given by way of example, which are in no way limiting and are illustrated by the appended drawings, wherein:

- Figure 1 is a cross-section of a roller screw mechanism according to a first embodiment of the invention;
- Figure 2 is an axial section, along line II-II of Figure 1;
- Figure 2a is a detail view of Figure 2;
- Figure 3 is a view of a roller of the mechanism of Figure 1;
- Figure 4 is a front view of Figure 3;
- Figure 4a illustrates schematically the generation of a hypocycloid curve;
- Figure 5 is a view of a gear wheel of the mechanism of Figure 1;
- Figure 6 is a view of the a roller according to a second embodiment;
- Figure 7 is a front view of Figure 6; and
- Figure 8 is a view a gear wheel according to a second embodiment.

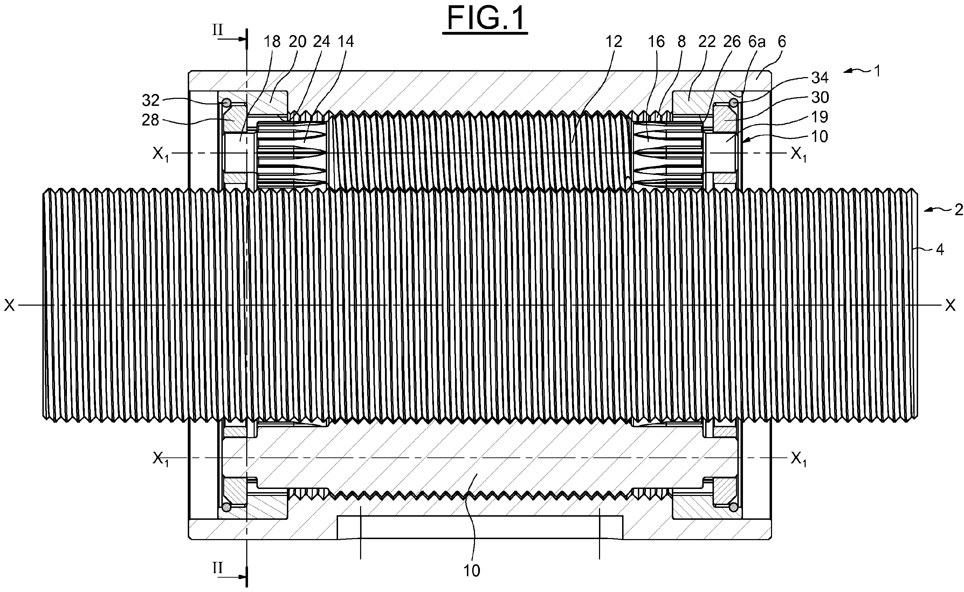

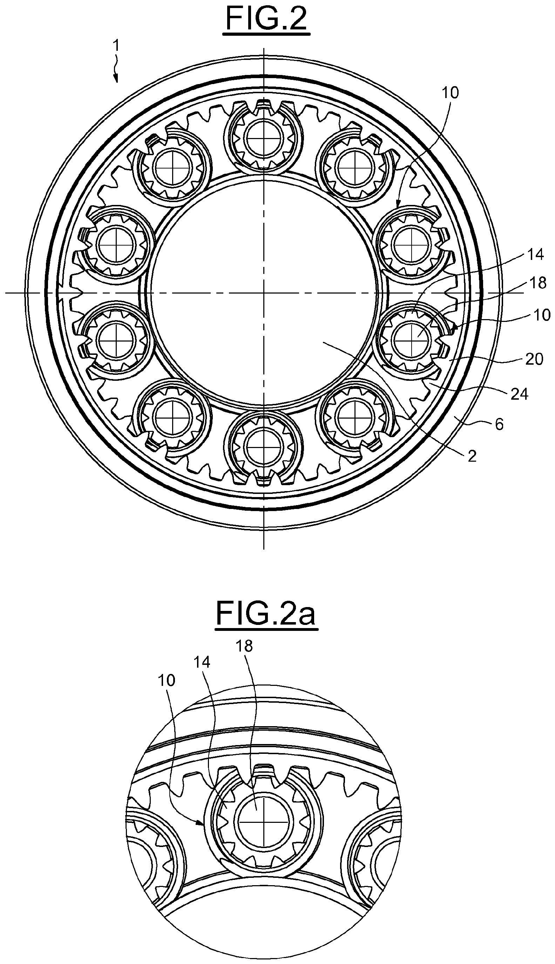

In Figures 1 and 2, a roller screw mechanism, which is referenced 1 as a whole, comprises a screw 2, with an axis X-X, provided with an external thread 4, a nut 6 mounted coaxially about the screw 4 and provided with an internal thread 8, the internal diameter of which is greater than the external diameter of the external thread 4, and a plurality of longitudinal rollers 10 arranged radially between the screw 2 and the nut 6. The screw 2 extends longitudinally through a cylindrical bore of the nut 6 on which the internal thread 8 is formed.

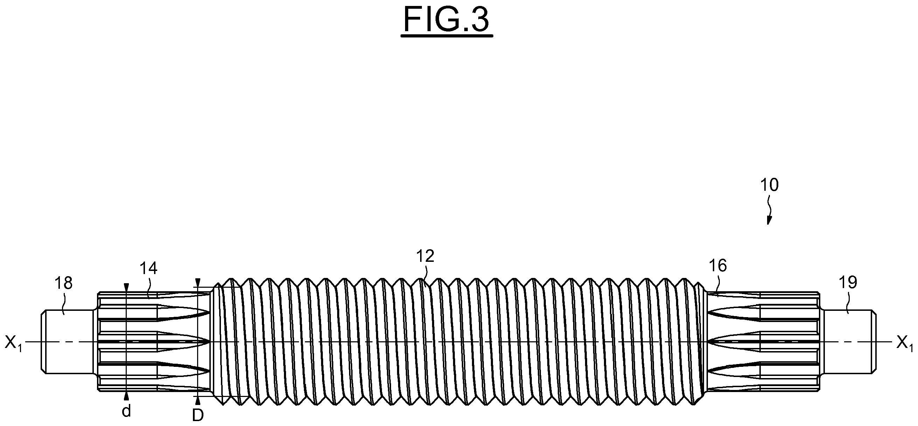

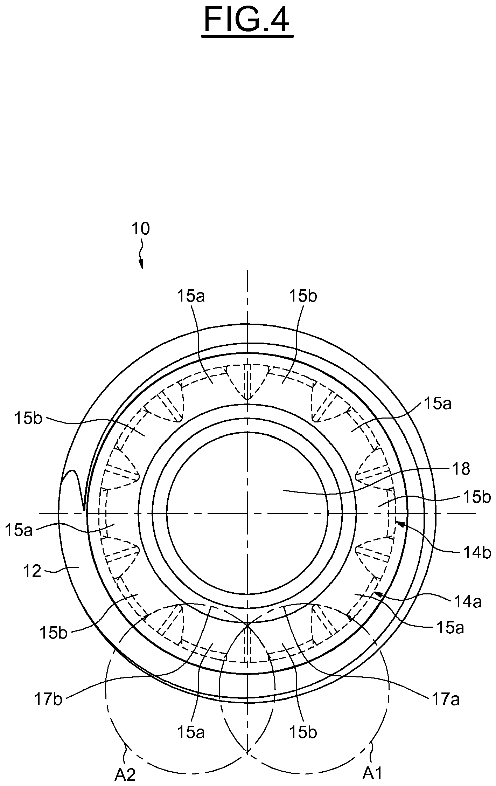

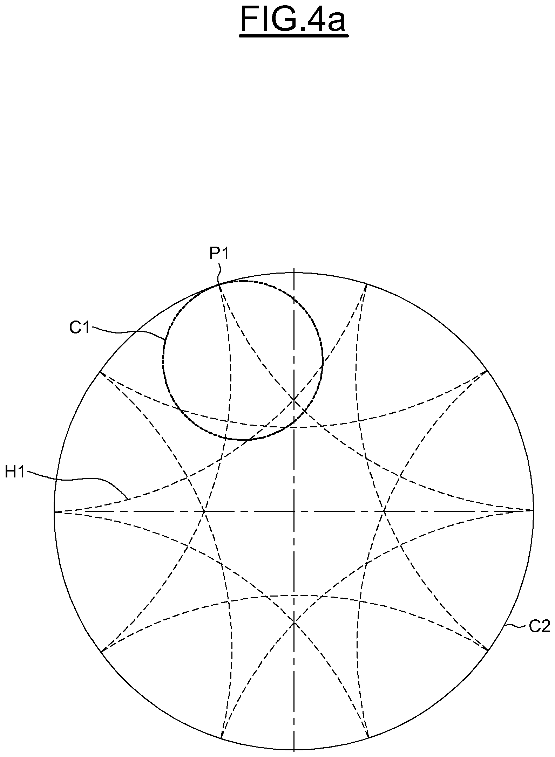

The rollers 10, illustrated in detail in Figures 3 and 4, are identical to each other and are distributed regularly around the screw 2. Each roller 10 extends along an axis $X_1$-$X_1$ which is coaxial with the axis X-X of the screw 2 and comprises an external thread 12 engaging the thread 4 of the screw 2 and the thread 8 of the nut 6. The thread 12 of each roller 10 is extended axially at each end by a plurality of teeth 14, 16 themselves extended axially by a cylindrical stud 18, 19 extending outwards.

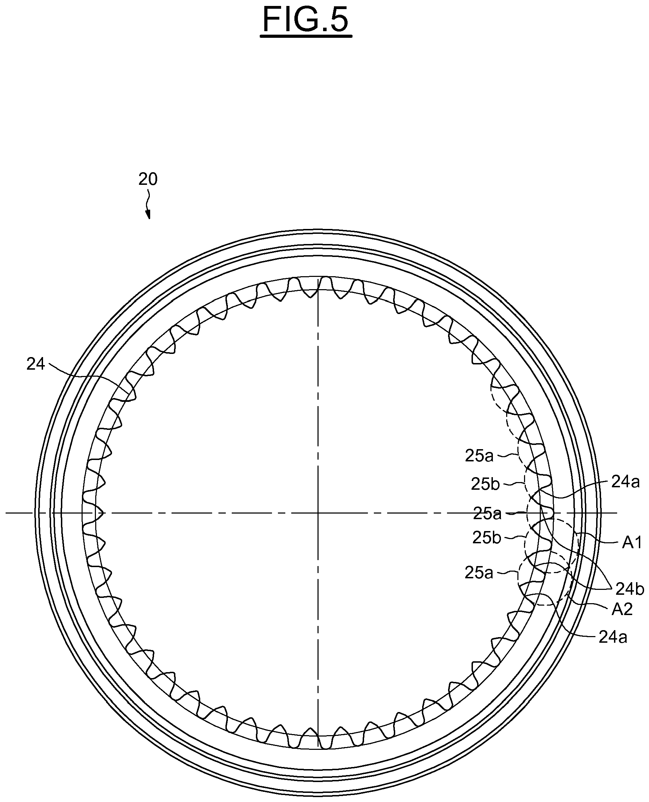

The mechanism 1 comprises two annular gear wheels 20, 22, illustrated in detail in Figure 5, fixed in a non-threaded part of the bore 6a of the nut 6 and each comprising internal teeth 24, 26 engaging the teeth 14, 16 respectively of the rollers 10 for the synchronization thereof. The mechanism 1 also includes two annular spacer rings 28, 30 each mounted radially between the thread 4 of the screw 2 and the associated gear wheel 20, 22 and including a plurality of cylindrical through-recesses (not referenced) which are distributed regularly in the circumferential direction and inside which the studs 18, 19 of the rollers 10 are housed. The spacer rings 28, 30 enable the rollers 10 to be carried and the regular circumferential spacing thereof to be kept.

The mechanism 1 further includes retainer rings 32, 34 each mounted in a groove provided in the bore of the associated gear wheel 20, 22 and provided in order to axially hold the corresponding spacer 28, 30.

As an example, the threads 12 of the rollers 10 and the thread 8 of the nut 6 have helix angles that are identical to each other and different to that of the thread 4 of the screw 2 such that, when the screw 2 rotates in relation to the nut 6, the rollers 10 rotate on themselves and roll about the screw 2 without moving axially inside the nut 6. The rollers 10 are rotationally guided parallel with the axis $X_1$-$X_1$ by the teeth 24, 26 of the gear wheels 20, 22. The screw 2 is axially or longitudinally moveable in relation to the rollers 10.

As illustrated on figure 3, the outer diameter d of the teeth 14, 16 of each roller 10 is less or equal to the diameter D of the thread root of the external thread 12 of said roller 10. The teeth 14, 16 of each roller 10 are thus not provided with an external thread, which reduces the pressure applied to the teeth 24, 26 of the gear wheels 20, 22.

As illustrated in Figure 4, each rollers 10 comprises a first set of teeth 14a having a plurality of gear teeth 15a and a second set of teeth 14b having a plurality of gear teeth 15b superposed on the first set of teeth 14a so that the teeth 15b of the second set of teeth 14b are located between the teeth 15a of the first set of teeth 14a.

Each tooth 15a, 15b of each roller 10 has, in cross section, a concave profile curve defined by a circular arc of first and second circles A1, A2.

The spaces 17a respectively between two adjacent teeth 15a of the first set of teeth 14a have a concave profile formed by a circular arc of a circle A1. The spaces 17b respectively between two adjacent teeth 15b of the second set of teeth 14b have a concave profile formed by a circular arc of a circle A2. The circles A1 and A2 have the same diameter.

Superimposing the first set of teeth 14a with the second set of teeth 14b generates the gear 14 of the rollers 10.

The number of teeth 15a the first set of teeth 14a of each roller 10 is equal to the number of teeth 15b of the second set of teeth 14b. A number of five teeth 15a of the first set of teeth 14a and a number of five teeth 15b of the second set of teeth 15b are illustrated on Figure 4. The total number of teeth 14 of each roller 10 is thus of ten. As an alternative, the total number of teeth 14 of each roller 10 could be higher than ten, for example twelve.

The circular arcs defining the tooth profile approximate a hypocycloid curve HI illustrated in dot lines on Figure 4a.

A hypocycloid is defined in Figure 4a as follows: a first circle C1 is tangent to a second circle C2 of larger diameter in a point PI on the circle C1. The path of the point PI, when the circle C1 rolls inside the circle C2 without slipping, generates a hypocycloid curve HI represented in dot lines on figure 4a.

The hypocycloid HI can be defined by the equation:

$$\begin{cases} x(\theta) = (R - r)\cos(\theta) + r\sin\left(\dfrac{R-r}{r}\theta\right) \\ y(\theta) = (R - r)\sin(\theta) - r\cos\left(\dfrac{R-r}{r}\theta\right) \end{cases} \qquad\qquad (Eq.1)$$

With: $(x(\theta),y(\theta))$ the coordinates of a point M of the hypocycloidal curve HI, the coordinates being based on an angular parameter $\theta$ such as $\theta \in [\theta_{min}, \theta_{max}]$;

r, the radius of the circle C1 that rolls beneath the larger circle C2

R, the radius of the larger circle C2

The radius r is defined accordingly to the number of teeth.

The value of $\theta_{min}$ and $\theta_{max}$ can be easily calculated since the top and the root radii of the gear are known.

Applying equation (Eq.1) to the gear teeth 14, 16 of the roller 10 or to the gear wheel 20, 22, R is the radius of the pitch circle of the roller 10 or the nut 6. The radius or the rolling circle that generates the profile (hypocycloid) is given by the equation:

$$r \cdot N - 2 \cdot R = 0 \qquad\qquad (Eq.2)$$

where N is the number of teeth of the gear.

The previous equation 1 (Eq.1) that references the profile of either the spur gear 14, 16 of the roller 10 or the wheel gear 20, 22 can be rewritten is the following form (Eq.3) by substituting the radius R.

$$\begin{cases} x(\theta) = r(N-1)\cos(\theta) + r\sin[r(N-1)\theta] \\ y(\theta) = r(N-1)\sin(\theta) - r\cos[r(N-1)\theta] \end{cases} \qquad\qquad (Eq.3)$$

When designing the ending epicyclic gears, the following relation equation 4 has to be satisfied:

$$\frac{N_2}{N_1} = \frac{R_{sn}}{R_r} = n \qquad\qquad (Eq.4)$$

With:

n, the number of starts of the screw 2 or the nut 6,

$N_1$, the number of the spur gear 14, 16 of the roller 10;

$N_2$, the number of the teeth 24, 26, of the wheel gear 20, 22;

$R_{sn}$, the pitch radius of the internal thread of the nut 6;

$R_r$ the pitch radius of the external thread of the roller 10.

Thanks to the tooth profile of the rollers 10, the addendum of each tooth of each roller 10 may be equal to zero. The addendum is defined as the height by which a tooth of a gear projects beyond the pitch circle.

The dedendum of the tooth profile of the rollers 10 is comprised between 0.65 and 1. The dedendum is defined as the height of a tooth between the pitch circle and the root circle.

Only one of the annular gear wheels 20 is illustrated in detail in Figure 5.

As illustrated in Figure 5, the gear wheel 20 comprises a first set of teeth 24a having a plurality of gear teeth 25a and a second set of teeth 24b having a plurality of gear teeth 25b superposed on the first set of teeth 24a so that the teeth 25b of the second set of teeth 24b are located between the teeth 25a of the first set of teeth 24a. The teeth 25a, 25b are shown in dot lines on a part of Figure 5.

Each tooth 25a of the first set of teeth 24a has a concave profile formed by a circular arc of a circle A1. Each tooth 25b of the second set of teeth 24b has a concave profile formed by a circular arc of a circle A2. The circles A1 and A2 have the same diameter.

Superimposing the first set of teeth 24a with the second set of teeth 24b generates the gear 24 of the wheel 20.

The circular arcs defining the tooth profile approximate a hypocycloid curve as explained above.

Thanks to the particular profile of the teeth 14, 24 respectively of the rollers 10 and of the wheels 20, 22, the meshing of the teeth 14 of the roller 10 with the teeth 24 of the wheel 20 is conjugated and the contact portion between the associated teeth 14, 24, defined by an hypocycloid, is increased, which decreases the wear of the teeth 14, 24 of the rollers 10 and the wheels 20, 22.

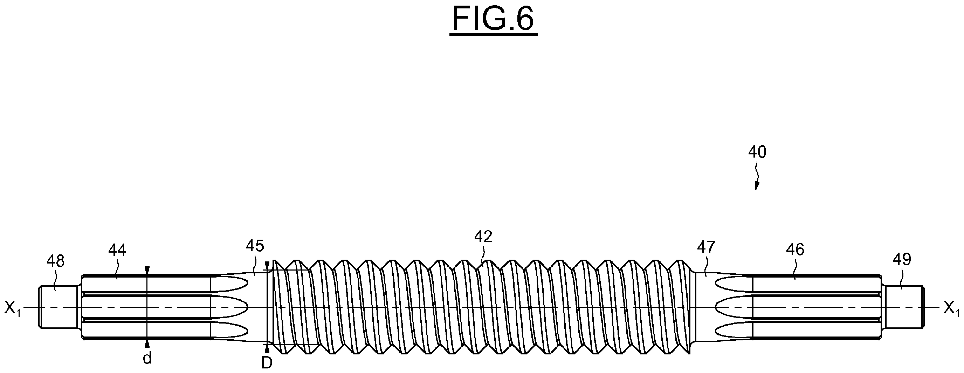

In the alternative embodiment illustrated in Figure 6 to 8 wherein the same elements have the same references, longitudinal rollers 40 and a gear wheel 50 are designed to be assembled in a the roller screw mechanism of Figure 1.

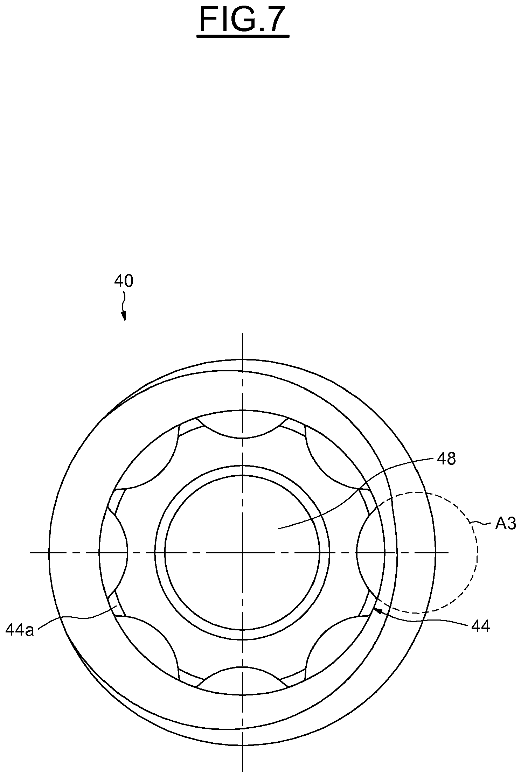

The rollers 40, illustrated in detail in Figures 6 and 7, are identical to each other and are distributed regularly around the screw 2. Each roller 40 extends along an axis $X_1$-$X_1$ which is coaxial with the axis X-X of the screw 2 and comprises an external thread 42 engaging the thread 4 of the screw 2 and the thread 8 of the nut 6. The thread 42 of each roller 40 is extended axially at each end by teeth 44, 46 themselves extended axially by a cylindrical stud 48, 49 extending outwards. A space portion 45, 47 is provided axially between the external thread 42 and each teeth 44, 46. As an alternative, no space portion could be provided.

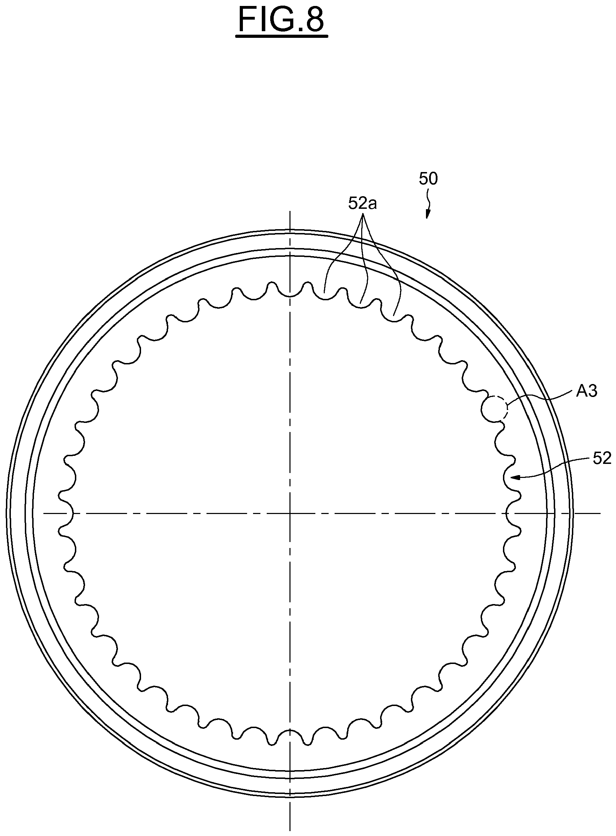

As illustrated on figure 6, the outer diameter d of the teeth 44, 46 of each roller 40 is less or equal to the diameter D of the thread root of the external thread 42 of said roller 40. The teeth 44, 46 of each roller 40 are thus not provided with an external thread, which reduces the pressure applied to the teeth 52 of the gear wheel 50 illustrated on Figure 8.

As illustrated in Figure 7, each roller 10 comprises one set of teeth 44 having a plurality of gear teeth 44a. Each tooth 44a of each roller 40 has, in cross section, a concave profile curve defined by a circular arc of a circle A3.

The number of teeth 44a in this example is equal to eight. As an alternative, the number of teeth 44a of each roller 10 could be higher than eight.

The circular arcs defining the tooth profile approximate a hypocycloid curve (not shown). As explained above, the hypocycloid is defined by the path of the point of a first circle, tangent to a second circle of larger diameter, when the smaller circle rolls inside the bigger circle without slipping.

Only one of the annular gear wheels 50 is illustrated in detail in Figure 8. Each annular gear wheel 50 is designed to be fixed in a non-threaded part of the bore 6a of the nut 6 and comprises internal teeth 52 engaging the teeth 44, 46 respectively of the rollers 40 for the synchronization thereof.

As illustrated in Figure 8, the gear wheel 50 comprises one set of teeth 52 having a plurality of gear teeth 52a having each, in cross section, a convex profile curve defined by circular arc of a circle A3. The circular arcs defining the tooth profile approximate a hypocycloid curve (not shown).

The hardness of the wheels is substantially similar to the hardness of the rollers. For example, the wheels are made in aluminium.

The use of this convex-concave tooth profile makes possible to design for the roller a spur gear which outer diameter is lower than the root diameter of the thread regardless of the pitch of the roller. This cannot be achieved for high pitch with an involute gear. For that reason, the interference between the thread and the tooth of the spur gears at each end of the roller can be avoided.

Furthermore, the width of the tooth is thus uniform from the root diameter to the outer diameter of the spur gear of the roller, which cannot be achieved with known involute tooth profile. Providing convex-concave tooth profile thus enables the contact surfaces of the rollers on the gear wheels to be increased, compared with a conventional rollers with teeth having, in cross section, an involve profile. The load is axially distributed over a larger surface than before.

The use of this profile reduces the pressure on both spur gear of the roller and wheel gear due to the geometry of the contacting surfaces. In fact, the mating surfaces of the gears are conforming contacts as they are made of concave-convex tooth profiles in cross section, i.e. concave for the spur gear and convex for the wheel gear. Owing to the axial load distribution and the reduction of the amount the maximum pressure, the contacts of the gearing are mostly rolling with very low wear which results in a longer life comparatively to an involute profile.

Thanks to the invention, the gear is able to resist more to binding and pressure, with the same number of tooth and larger face width of teeth compared to a gear with involute tooth profile.

Also, the use of the hypocycloidal profile provides much facility to the manufacturing process of the roller as it allow reducing the roller thread length only to its useful length.

Indeed, the manufacturing of the thread can be rolled or even realized directly on a heat treated material, facts that were not possible with the known involute gearing.

In operation, during the transmission of the forces, the contact pressure exerted by the flanks of the teeth of each roller on the flanks of the corresponding wheel is thus distributed over a larger surface. The stiffness is thus increased due to the decrease in the width of each tooth.

Thanks to the tooth profile of the rollers and of the wheels, the load capacity of the roller screw mechanism is increased and the wear of the wheels is reduced. Indeed, the teeth of the rollers do not have to be threaded during the threaded operation of the external thread of the rollers.

**Claims**

1. Roller screw mechanism provided with a screw (2) comprising an external thread (4), a nut (6) surrounding and coaxial with said screw (2), said nut (6) comprising an internal thread (8), two gear wheels (20, 22, 50) mounted in a non-threaded part of the nut (6), each gear wheel (20, 22, 50) comprising a first set of teeth (24, 26, 52) having a plurality of internal teeth (25a, 52a), and a plurality of rollers (10, 40) radially located between the screw (2) and the nut (6), each roller (10, 40) comprising an external thread (12, 42) designed to engage the external and internal threads (4, 8) of said screw (2) and said nut (6), and axially at each end a first set of teeth (14a, 44) having a plurality of gear teeth (15a, 44a) designed to engage with the internal gear teeth (25a, 52a) of the gear wheels (20, 22), the outer diameter (d) of the gear teeth (14a, 44a) of each roller (10, 40) being less or equal to the diameter (D) of the thread root of the external thread (12, 42) of said roller (10, 40), **characterized in that** each tooth (15a, 15b, 44a) of each roller (10, 40) has, in cross section, a concave profile curve and each tooth (25a, 25b, 52a) of each gear wheel (20, 22, 50) has, in cross section, a convex profile curve.

2. Roller screw mechanism according to Claim 1, wherein each roller (10) comprises a second set of teeth (14b) having a plurality of gear teeth (15b) superposed on the first set of teeth (14a) so that the teeth (15b) of the second set of teeth (14b) are located between the teeth (15a) of the first set of teeth (14b) and each gear wheels (20, 22) comprises a second set of teeth (24b) having a plurality of gear teeth (25b) superposed on the first set of teeth (24a) so that the teeth (25b) of the second set of teeth (24b) are located between the teeth (25a) of the first set of teeth (24a).

3. Roller screw mechanism according to Claim 1 or 2, wherein the tooth profile curve is defined by a circular arc.

4. Roller screw mechanism according to Claim 1 or 2, wherein the tooth profile curve is defined by a hypocycloid curve.

5. Roller screw mechanism according to Claim 4, wherein the portion of each concave tooth of each roller (10, 40) in contact with a convex tooth of the associated gear wheel (20, 22, 50) has, in cross section, a hypocycloid profile.

6. Roller screw mechanism according to any of the preceding Claims, wherein the addendum of each tooth of each roller (10, 40) equals to zero.

7. Roller screw mechanism according to any of the preceding Claims, wherein each roller (10, 40) comprises, at each end, a cylindrical stud (18, 19, 48, 49) axially extending from the teeth (44, 46, 14, 16) of the roller (10, 40), and designed to be fitted inside cylindrical through-out recesses provided on an annular spacer ring (28, 30) mounted radially between the thread (4) of the screw (2) and the associated wheel (20, 22, 50).

8. Roller screw mechanism according to any of the preceding Claims, in which the hardness of the wheels (20, 22, 50) is substantially similar to the hardness of the rollers (10, 40).

9. Actuator including a rotating means and a roller screw mechanism (1) according to any one of the preceding Claims, the screw (2) of the mechanism being coupled with the rotating means.

**Patentansprüche**

1. Walzenschraubenmechanismus mit einer Schraube (2), umfassend: ein Außengewinde (4), eine Mutter (6), die die Schraube (2) umgibt und koaxial dazu angeordnet ist, wobei die Mutter (6) ein Innengewinde (8), zwei Zahnräder (20, 22, 50), die in einem gewindelosen Teil der Mutter (6) montiert sind, wobei jedes Zahnrad (20, 22, 50) einen ersten Satz Zähne (24, 26, 52) mit mehreren Innenzähnen (25a, 52a) umfasst, sowie mehrere Walzen (10, 40),die sich radial zwischen der Schraube (2) und der Mutter (6) befinden, wobei jede Walze (10, 40) ein Außengewinde (12, 42), das ausgebildet ist, um in die Außen- und Innengewinde (4, 8) der Schraube (2) und der Mutter (6) einzugreifen, sowie axial an jedem Ende eines ersten Satzes Zähne (14a, 44) mehrere Zahnradzähne (15a, 44a), die ausgebildet sind, um in die Innenzähne (25a, 52a) der Zahnräder (20, 22) einzugreifen, wobei der Außendurchmesser (d) der Zahnradzähne (14a, 44a) einer jeden Walze (10, 40) kleiner als der Durchmesser (D) des Gewindekerns des Außengewindes (12, 42) der Walze (10, 40) ist oder diesem entspricht, **dadurch gekennzeichnet, dass** jeder Zahn (15a, 15b, 44a) einer jeden Walze (10, 40) im Querschnitt eine konkave Profilkurve und jeder Zahn (25a, 25b, 52a) eines jeden Zahnrads (20, 22, 50) im Querschnitt eine konvexe Profilkurve aufweist.

2. Walzenschraubenmechanismus nach Anspruch 1, wobei jede Walze (10) einen zweiten Satz Zähne (14b) mit mehreren Zahnradzähnen (15b) aufweist, die dem ersten Satz Zähne (14a) überlagert sind, so dass sich die Zähne (15b) des zweiten Satzes Zähne (14b) zwischen den Zähnen (15a) des ersten Satzes Zähne (14b) befinden und die Zahnräder (20, 22) jeweils einen zweiten Satz Zähne (24b) mit mehreren Zahnradzähnen (25b) umfassen, die dem ersten Satz Zähne (24a) überlagert sind, so dass sich die Zähne (25b) des zweiten Satzes Zähne (24b) zwischen den Zähnen (25a) des ersten Satzes Zähne (24a) befinden.

3. Walzenschraubenmechanismus nach Anspruch 1 oder 2, wobei die Zahnprofilkurve durch einen Kreisbogen definiert ist.

4. Walzenschraubenmechanismus nach Anspruch 1 oder 2, wobei die Zahnprofilkurve durch eine Hypozykloidkurve definiert ist.

5. Walzenschraubenmechanismus nach Anspruch 4, wobei der Abschnitt eines jeden konkaven Zahns einer jeden Walze (10, 40), der in Kontakt mit einem konvexen Zahn des zugehörigen Zahnrads (20, 22, 50) im Querschnitt ein Hypozykloidprofil hat.

6. Walzenschraubenmechanismus nach einem der vorstehend aufgeführten Ansprüche, wobei das Addendum eines jeden Zahns einer jeden Walze (10, 40) gleich Null ist.

7. Walzenschraubenmechanismus nach einem der vorstehend aufgeführten Ansprüche, wobei jede Walze (10, 40) an jedem Ende einen zylindrischen Zapfen (18, 19, 48, 49) umfasst, der sich von den Zähnen (44, 46, 14, 16) der Walze (10, 40) aus axial erstreckt und ausgebildet ist, um in die zylindrischen Ausnehmungen eingepasst zu werden, die an einem ringförmigen Abstandsring (28, 30) vorgesehen sind, der radial zwischen dem Gewinde (4) der Schraube (2) und dem zugehörigen Rad (20, 22, 50) montiert ist.

8. Walzenschraubenmechanismus nach einem der vorstehend aufgeführten Ansprüche, wobei die Härte der Räder (20, 22, 50) im Wesentlichen ähnlich wie die Härte der Walzen (10, 40) ist.

9. Aktuator mit einer Dreheinrichtung und einem Walzenschraubenmechanismus (1) nach einem der vorstehend aufgeführten Ansprüche, wobei die Schraube (2) des Mechanismus mit der Dreheinrichtung gekoppelt ist.


**Revendications**

1. Mécanisme de vis à rouleaux pourvu d'une vis (2) comprenant un filetage externe (4) et un écrou (6) entourant ladite vis (2) et coaxial avec elle, ledit écrou (6) comprenant un filetage interne (8), deux roues dentées (20, 22, 50) montées dans une partie non filetée de l'écrou (6), chaque roue dentée (20, 22, 50) comprenant un premier jeu de dents (24, 26, 52) comportant une pluralité de dents internes (25a, 52a), et une pluralité de rouleaux (10, 40) situés radialement entre la vis (2) et l'écrou (6), chaque rouleau (10, 40) comprenant un filetage externe (12, 42) conçu pour s'engrener avec les filets externe et interne (4, 8) de ladite vis (2) et dudit écrou (6), et axialement, à chaque extrémité, un premier jeu de dents (14a, 44) comportant une pluralité de dentures (15a, 44a) conçues pour s'engrener avec les dentures internes (25a, 52a) des roues dentées (20, 22), le diamètre extérieur (d) des dentures (14a, 44a) de chaque rouleau (10, 40) étant inférieur ou égal au diamètre (D) du fond de filet du filetage externe (12, 42) dudit rouleau (10, 40), **caractérisé en ce que** chaque dent (15a, 15b, 44a) de chaque rouleau (10, 40) présente, en section transversale, une courbe de profil concave et chaque dent (25a, 25b, 52a) de chaque roue dentée (20, 22, 50) présente, en coupe transversale, une courbe de profil convexe.

2. Mécanisme de vis à rouleaux selon la revendication 1, dans lequel chaque rouleau (10) comprend un second jeu de dents (14b) comportant une pluralité de dentures (15b), superposé au premier jeu de dents (14a) de façon à ce que les dentures (15b) du second jeu de dents (14b) soient situées entre les dentures (15a) du premier jeu de dents (14b) et chaque roue dentée (20, 22) comprend un second jeu de dents (24b) comportant une pluralité de dentures (25b), superposé au premier jeu de dents (24a) de façon à ce que les dentures (25b) du second jeu de dents (24b) soient situées entre les dentures (25a) du premier jeu de dents (24a).

3. Mécanisme de vis à rouleaux selon la revendication 1 ou 2, dans lequel la courbe de profil de dent est définie par un arc circulaire.

4. Mécanisme de vis à rouleaux selon la revendication 1 ou 2, dans lequel la courbe de profil de dent est définie par une hypocycloïde.

**5.** Mécanisme de vis à rouleaux selon la revendication 4, dans lequel la partie de chaque dent concave de chaque rouleau (10, 40) en contact avec une dent convexe de la roue dentée (20, 22, 50) associée présente, en section transversale, un profil d'hypocycloïde.

**6.** Mécanisme de vis à rouleaux selon l'une quelconque des revendications précédentes, dans lequel la saillie de chaque dent de chaque rouleau (10, 40) est égale à zéro.

**7.** Mécanisme de vis à rouleaux selon l'une quelconque des revendications précédentes, dans lequel chaque rouleau (10, 40) comprend, à chaque extrémité, un goujon cylindrique (18, 19, 48, 49) s'étendant axialement à partir des dents (44, 46, 14, 16) du rouleau (10, 40) et conçu pour être installé à l'intérieur d'évidements cylindriques traversants disposés sur une bague-entretoise (28, 30) annulaire montée radialement entre le filetage (4) de la vis (2) et la roue (20, 22, 50) associée.

**8.** Mécanisme de vis à rouleaux selon l'une quelconque des revendications précédentes, dans lequel la dureté des roues (20, 22, 50) est sensiblement similaire à la dureté des rouleaux (10, 40).

**9.** Actionneur comprenant un moyen de rotation et un mécanisme (1) de vis à rouleaux selon l'une quelconque des revendications précédentes, la vis (2) du mécanisme étant accouplée au moyen de rotation.

FIG.1

EP 2 784 350 B1

## FIG.2

## FIG.2a

FIG.3

# FIG.4

# FIG.4a

# FIG.5

EP 2 784 350 B1

## FIG.6

# FIG.7

40

48

A3

44a

44

# FIG.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009103291 A